# EUROPEAN PATENT APPLICATION

(11) **EP 4 586 622 A1**
(43) Date of publication of application: **16.07.2025**
(21) Application number: 23870044.7
(22) Date of filing: 21.08.2023
(51) Int. Cl.: H04N 21/439, H04N 21/234, H04N 21/44, G06T 7/246

(54) **PLAYBACK CONTROL METHOD AND APPARATUS**

(30) Priority: 28.09.2022 CN 202211196932
(71) Applicant: Huawei Technologies Co., Ltd., Shenzhen, Guangdong 518129 (CN)
(72) Inventor: FAN, Yanping, Shenzhen, Guangdong 518129 (CN); XU, Hai, Shenzhen, Guangdong 518129 (CN); WANG, Minbo, Shenzhen, Guangdong 518129 (CN); DONG, Amei, Shenzhen, Guangdong 518129 (CN)
(74) Representative: Gill Jennings & Every LLP
(86) International application number: PCT/CN2023/113990
(87) International publication number: WO 2024/066799

(57) **Abstract**

This application discloses a playback control method and apparatus. The method includes: obtaining a target video frame and data of a target sound, and controlling an audio playback apparatus to simulate a sound source at a target location to play the target sound, where the target location is related to at least information about a target image area in the target video frame. The target image area is an image area in which a target object that generates the target sound is located. The target location related to the information about the target image area may be used to simulate a visual location that is determined by a user based on the target video frame and at which the target sound is generated. Therefore, even if a collection end does not provide a sound source location of the target sound, based on target audio and video data, the audio playback apparatus may be controlled to simulate the sound source at the target location to play the target sound. This helps implement consistency between a visual location and an auditory location of the sound source of the target sound in a playback area, and brings a sense of being present in a collection area to the user.

## Description

This application claims priority to Chinese Patent Application No. 202211196932.9, filed with the China National Intellectual Property Administration on September 28, 2022 and entitled "PLAYBACK CONTROL METHOD AND APPARATUS", which is incorporated herein by reference in its entirety.

### TECHNICAL FIELD

This application relates to the field of data processing, and in particular, to a playback control method and apparatus.

### BACKGROUND

After receiving audio and video data collected by a collection end, a receiving end such as an audio and video player or a conference terminal may play a corresponding sound by using an audio playback apparatus, and play a corresponding video by using a video playback apparatus. To improve user experience, the audio playback apparatus generally supports a stereo technology such as a multi-channel technology, and provides a user with sound field experience in two-dimensional or three-dimensional space.

When the collection end can collect location information of a sound source, the receiving end may control, based on the location information, the audio playback apparatus to simulate a sound source at a corresponding location to play a sound, so that a sound field direction reproduced by the audio playback apparatus is basically the same as a direction of a sound source at a collection site, thereby bringing a sense of being present at the collection site to the user.

However, there is a relatively high hardware requirement on the collection end for collecting the location information of the sound source. When the collection end cannot collect the location information of the sound source, the receiving end cannot provide the user with a sense of being present at the collection site. This is not conducive to improvement of user experience.

### SUMMARY

This application provides a playback control method and apparatus, to control an audio playback apparatus to play a sound without depending on a location of a sound source collected by a collection end. This brings a sense of being present in a collection site to a user.

According to a first aspect, this application provides a playback control method. The method may be applied to a computing device, and the computing device may establish a communication connection to an audio playback apparatus. The method includes: obtaining target audio and video data, where the target audio and video data includes a target video frame and data of a target sound, the target video frame includes a target image area of a target object, and the target object is a sound source that generates the target sound; and generating audio playback control data and sending the audio playback control data to the audio playback apparatus based on the target audio and video data, where the audio playback control data is used to control the audio playback apparatus to simulate a sound source at a target location to play the target sound, and the target location is related to at least information about the target image area.

Because the target object in the target image area in the target video frame is a sound source (referred to as a visual sound source) that is determined by a user based on the target video frame and that generates the target sound, the target location related to the information about the target image area may be used to simulate a visual location that is determined by the user based on the target video frame and at which the target sound is generated. **In** this way, even if a collection end does not provide a sound source location of the target sound, the information about the target image area may be determined based on the target audio and video data, to control the audio playback apparatus to simulate the sound source at the target location to play the target sound. This helps implement consistency between a visual location and an auditory location of the sound source of the target sound in a playback area, and brings a sense of being present in a collection area to the user.

Optionally, the information about the target image area indicates a location of the target image area in the target video frame and/or a pixel size of the target object in the target image area. The location of the target image area in the target video frame may be used to determine a location of a visual sound source of the target sound on a parallel plane, and the parallel plane may be a plane in which a display area of the target video frame is located. The pixel size of the target object in the target image area may be used to determine a distance between the visual sound source of the target sound and the display area in a vertical direction, and the vertical direction may be a direction perpendicular to the display area. Therefore, a location of the visual sound source of the target sound in the playback area is determined based on the information about the target image area, so that the target location is closer to the visual location that is determined by the user based on the target video frame and at which the target sound is generated.

Optionally, the target image area is determined from a plurality of candidate image areas, and each candidate image area is an image area including a face in the target video frame. **In** this way, the target image area does not need to be selected from all image areas in the target video frame. This helps reduce computation overheads of the computing device.

Optionally, a lip motion status of the face in the target image area indicates that a lip motion occurs, and/or an object matching an image feature (for example, a facial feature) in the target image area is the same as an object matching a voiceprint feature of the target sound (that is, the target image area and the target sound are respectively an image area and a sound that are collected for a same person). This helps more accurately predict an image area in which the visual sound source determined by the user by using the target video frame is located, so that the target location is closer to the visual location that is determined by the user based on the target video frame and at which the target sound is generated.

Optionally, the data of the target sound is obtained through separation from data of a mixed sound, and the mixed sound includes sounds generated by a plurality of objects. This helps control the audio playback apparatus to simulate a location of each object to play a corresponding sound, and brings a sense of being present in a collection site to the user.

Optionally, the target video frame is a video frame of a single image that is obtained from video frames of a plurality of images. Optionally, the target video frame and the data of the target sound are from a same collection end. Compared with determining a target image area from video frames of a plurality of images, determining a target image area from a video frame of a single image after video frames of a plurality of images are preprocessed to obtain the video frame of a single image reduces computation overheads of the computing device.

Optionally, the target audio and video data further includes calibration information, the calibration information indicates a location of the target video frame on a playback interface of a video playback apparatus and/or a location of the video playback apparatus relative to the audio playback apparatus, and the video playback apparatus is configured to play the target video frame. The target location is further related to the calibration information. **In** this way, the target location is closer to the visual location that is determined by the user based on the target video frame and at which the target sound is generated.

Optionally, when the target video frame is a video frame of a single image (referred to as a sub-image) that is obtained from video frames of a plurality of images, the calibration information indicates a location of the sub-image corresponding to the target video frame in the plurality of images.

Optionally, the method further includes: sending video playback control data to the video playback apparatus based on the target audio and video data, where the video playback control data is used to control the video playback apparatus to play the target video frame in a target time period, and the target time period is a time period in which the audio playback apparatus plays the target sound. Optionally, the target video frame and the data of the target sound are data collected by a video collection apparatus and an audio collection apparatus respectively for a same collection area in a same time period, and the video playback apparatus and the audio playback apparatus are controlled to play corresponding data in the target time period. This helps synchronize the target sound heard by the user and the target video frame seen by the user, and brings a sense of being present in a collection site to the user.

According to a second aspect, this application provides a playback control apparatus, including an obtaining module and a sending module. The obtaining module is configured to obtain target audio and video data, where the target audio and video data includes a target video frame and data of a target sound, the target video frame includes a target image area of a target object, and the target object is a sound source that generates the target sound. The sending module is configured to send audio playback control data to an audio playback apparatus based on the target audio and video data, where the audio playback control data is used to control the audio playback apparatus to simulate a sound source at a target location to play the target sound, and the target location is related to information about the target image area.

Optionally, the information about the target image area indicates a location of the target image area in the target video frame and/or a pixel size of the target object in the target image area. The location of the target image area in the target video frame may be used to determine a location of a visual sound source of the target sound on a parallel plane, and the parallel plane may be a plane in which a display area of the target video frame is located. The pixel size of the target object in the target image area may be used to determine a distance between the visual sound source of the target sound and the display area in a vertical direction, and the vertical direction may be a direction perpendicular to the display area. Therefore, a location of the visual sound source of the target sound in the playback area is determined based on the information about the target image area, so that the target location is closer to the visual location that is determined by a user based on the target video frame and at which the target sound is generated.

Optionally, the target image area is determined from a plurality of candidate image areas, and each candidate image area is an image area including a face in the target video frame. **In** this way, the target image area does not need to be selected from all image areas in the target video frame. This helps reduce computation overheads of the computing device.

Optionally, a lip motion status of the face in the target image area indicates that a lip motion occurs, and/or an object matching an image feature of the target image area is the same as an object matching a voiceprint feature of the target sound. This helps more accurately predict an image area in which the visual sound source determined by the user by using the target video frame is located, so that the target location is closer to the visual location that is determined by the user based on the target video frame and at which the target sound is generated.

Optionally, the target audio and video data further includes calibration information, the calibration information indicates a location of the target video frame on a playback interface of a video playback apparatus and/or a location of the video playback apparatus relative to the audio playback apparatus, and the video playback apparatus is configured to play the target video frame. The target location is further related to the calibration information. **In** this way, the target location is closer to the visual location that is determined by the user based on the target video frame and at which the target sound is generated.

Optionally, the data of the target sound is obtained through separation from data of a mixed sound, and the mixed sound includes sounds generated by a plurality of objects. This helps control the audio playback apparatus to simulate a location of each object to play a corresponding sound, and brings a sense of being present in a collection site to the user.

Optionally, the target video frame is a video frame of a single image that is obtained from video frames of a plurality of images. Optionally, the target video frame and the data of the target sound are from a same collection end. Compared with determining a target image area from video frames of a plurality of images, determining a target image area from a video frame of a single image after video frames of a plurality of images are preprocessed to obtain the video frame of a single image reduces computation overheads of the computing device.

Optionally, the sending module is further configured to send video playback control data to the video playback apparatus based on the target audio and video data, where the video playback control data is used to control the video playback apparatus to play the target video frame in a target time period, and the target time period is a time period in which the audio playback apparatus plays the target sound. Optionally, the target video frame and the data of the target sound are data collected by a video collection apparatus and an audio collection apparatus respectively for a same collection area in a same time period, and the video playback apparatus and the audio playback apparatus are controlled to play corresponding data in the target time period. This helps synchronize the target sound heard by the user and the target video frame seen by the user, and brings a sense of being present in a collection site to the user.

According to a third aspect, this application provides a computing device, including a memory and a processor. The memory stores code, the processor is configured to execute the code, and when the code is executed, the computing device can perform the method according to any one of the first aspect or the possible implementations of the first aspect.

Optionally, the computing device may further include a communication interface. For example, the processor can receive target audio and video data or send audio playback control data through the communication interface.

According to a fourth aspect, this application provides a computer storage medium. The computer storage medium stores a computer program, and when the program is executed by a computer, the computer is enabled to perform the method according to any one of the first aspect or the possible implementations of the first aspect.

According to a fifth aspect, this application provides a playback system, including the computing device according to the third aspect and an audio playback apparatus.

Optionally, the playback system further includes a video playback apparatus.

A sixth aspect of this application provides a chip system. The chip system includes a processor and an interface circuit, the processor is coupled to a memory by using the interface circuit, and the processor is configured to execute program code in the memory, to perform the method according to any one of the first aspect or the possible implementations of the first aspect. The chip system may include a chip, or may include a chip and another discrete component.

The apparatuses provided in this application or the computing device in the playback system may be configured to perform the foregoing corresponding methods. Therefore, for technical effects that can be achieved by the apparatuses in this application, refer to the technical effects achieved by the foregoing corresponding methods. Details are not described herein again.

### BRIEF DESCRIPTION OF DRAWINGS

FIG. 1 schematically shows a possible structure of a playback system according to this application;
FIG. 2 schematically shows a video frame played by a video playback apparatus;
FIG. 3 schematically shows a possible procedure of a playback control method according to this application;
FIG. 4 schematically shows a possible procedure of S302 shown in FIG. 3;
FIG. 5 schematically shows a possible procedure of S403;
FIG. 6 schematically shows a possible structure of a playback area;
FIG. 7 schematically shows another system architecture to which this application is applicable;
FIG. 8 schematically shows video frames of a plurality of images received by a computing device;
FIG. 9 schematically shows a possible structure of a playback control apparatus according to this application; and
FIG. 10 schematically shows a possible structure of a computing device according to this application.

### DESCRIPTION OF EMBODIMENTS

This application provides a playback system. The playback system includes a collection area and a playback area. A collection end is disposed in the collection area, and the collection end is configured to collect data of a sound and a video frame sequence. A playback end is disposed in the playback area, and the playback end is configured to play the sound and the video frame sequence. Shapes, sizes, and closure types of the collection area and the playback area are not limited in this application. For example, the collection area or the playback area may be a closed indoor area or an open outdoor area. A purpose of the playback system is not limited in this application. For example, the playback system may provide face-to-face audio and video experience for a user in the playback area. In some examples, the playback end is disposed in the collection area, the collection end is disposed in the playback area, the collection area may be used as the playback area, and the playback area may be used as the collection area.

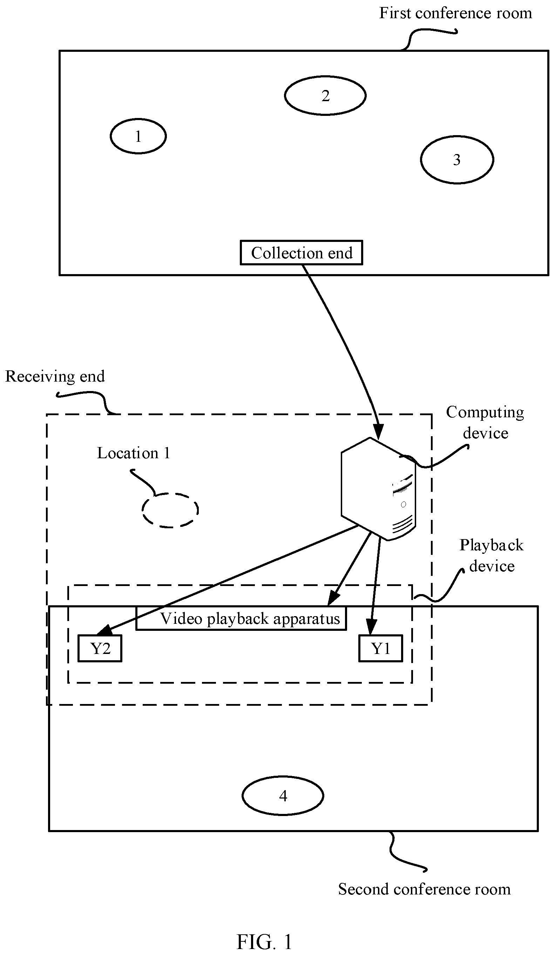

FIG. 1 schematically shows a possible structure of a playback system. In FIG. 1, an example in which the playback system includes a first conference room and a second conference room is used, where the first conference room and the second conference room are respectively used as a collection area and a playback area. As shown in FIG. 1, a collection end is disposed in the first conference room, and a receiving end is disposed in the second conference room. The collection end is configured to obtain data of a sound and a video frame sequence in a time period (denoted as a time period t) in the first conference room. The collection end is communicatively connected to the receiving end, to send the data of the sound and the video frame sequence to the receiving end. The receiving end is configured to play the sound and the video frame sequence.

The collection end includes but is not limited to a collection device. The collection device includes a video collection apparatus and an audio collection apparatus (not shown in FIG. 1). The video collection apparatus is configured to obtain an image or a video frame sequence in the time period t in the first conference room. A type of the video collection apparatus is not limited in this application. Optionally, the video collection apparatus may be an image sensor, for example, a camera, a radar, or an infrared detector camera. The audio collection apparatus is configured to obtain data of a sound in the time period t in the first conference room. A type of the audio collection apparatus is not limited in this application. Optionally, the audio collection apparatus may be a sound sensor, for example, a microphone.

As shown in FIG. 1, the receiving end includes but is not limited to a computing device and a playback device. The playback device includes an audio playback apparatus and a video playback apparatus. Types of the audio playback apparatus and the video playback apparatus are not limited in this application. For example, the audio playback apparatus includes a speaker Y1 and a speaker Y2 shown in FIG. 1, and the video playback apparatus is a liquid crystal display or a projector.

The computing device shown in FIG. 1 may be a physical device or a virtual device, and the virtual device may be deployed locally or on a cloud server. In FIG. 1, an example in which the computing device and the playback device are disposed on different devices is used. Optionally, all or some functions of the computing device may be integrated into the playback device. In FIG. 1, an example in which the audio playback apparatus and the video playback apparatus are disposed on different devices is used. Optionally, the audio playback apparatus and the video playback apparatus may be disposed on a same device.

A data format or an encapsulation manner of the data of the sound and the video frame sequence is not limited in this application. Optionally, the receiving end encapsulates the data of the sound and the video frame sequence together for sending to the receiving end. Alternatively, optionally, the receiving end encapsulates the data of the sound and sends the encapsulated data to the receiving end, and encapsulates the video frame sequence and sends the encapsulated video frame sequence to the receiving end.

After receiving the data of the sound and the video frame sequence, the computing device may send video playback control data to the video playback device, and send audio playback control data to the audio playback apparatus. The video playback control data indicates the video playback apparatus to play the video frame sequence, and the audio playback control data indicates the audio playback apparatus to play the sound.

Optionally, the video playback control data may include but is not limited to the video frame sequence. Optionally, the computing device may perform processing (for example, format conversion) on the video frame sequence to obtain the video playback control data.

Optionally, the audio playback control data may include but is not limited to the data of the sound. Optionally, the computing device may perform processing (for example, format conversion) on the data of the sound to obtain the audio playback control data.

Optionally, the audio playback control data includes audio control data, the audio control data is used to control a playback status of the audio playback apparatus, and the playback status of the audio playback apparatus includes an on/off state, and/or a volume of an output sound, and/or a delay of the output sound, and/or the like.

Optionally, the audio playback apparatus may include at least two audio playback units. A type of the audio playback unit is not limited, provided that the audio playback unit can output the foregoing sound. For example, the audio playback unit is a speaker. In FIG. 1, an example in which the audio playback apparatus includes two audio playback units (the speaker Y1 and the speaker Y2) is used. Optionally, the audio playback apparatus may simulate a sound source at a location to play a sound. As shown in FIG. 1, the speaker Y1 and the speaker Y2 may simulate a sound source at a location 1 to play a sound. It is assumed that a user 4 is in the second conference room, and after the user 4 hears the sound played by each of the speaker Y1 and the speaker Y2, it is considered from the auditory perspective that the sound comes from the location 1, which is equivalent to that an equivalent sound source or an auditory sound source exists at the location 1. Optionally, the audio control data is used to control a status of each audio playback unit, and a location of an equivalent sound source is adjusted by controlling the status of each audio playback unit in the audio playback apparatus.

As shown in FIG. 1, it is assumed that a user 1 to a user 3 are in the first conference room in a target time period in the time period t, and the user 1 makes a sound 1 in the target time period. After the collection end in the first conference room sends data of the sound 1 and a video frame sequence to the receiving end, the video playback device of the receiving end plays the video frame sequence, and the speaker 1 and the speaker 2 simulate a sound source at the location 1 to play the sound 1.

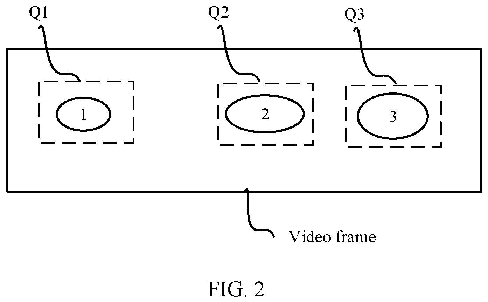

FIG. 2 schematically shows that the video playback apparatus outputs a video frame in the target time period in the first conference room. As shown in FIG. 2, the video frame includes an image area Q1 corresponding to the user 1, an image area Q2 corresponding to the user 2, and an image area Q3 corresponding to the user 3. It is assumed that the user 4 in the second conference room determines, through the video frame, that the user 1 is speaking. In this application, a sound source of the sound 1 that is determined by the user 4 through the video frame is referred to as a visual sound source. To make the user 4 consider that the sound 1 played by the speaker Y1 and the speaker Y2 comes from the user 1 seen by the user 4, that is, to make locations of a visual sound source and an auditory sound source (that is, an equivalent sound source) of the sound 1 consistent, the collection end may compute a location of the user 1, for example, determine the location of the user 1 based on a difference of time of arrival of the sound 1 at different microphones in a microphone array, and send data of the sound 1 and location information of the user 1 to the receiving end. In this way, the computing device may control locations of equivalent sound sources of the speaker Y1 and the speaker Y2 based on the location information and the data of the sound 1, to create face-to-face video conference communication experience.

However, when the collection end cannot estimate the location of the user 1 or does not send the location information of the user 1 to the receiving end, the computing device cannot control a location of an equivalent sound source of the audio playback apparatus based on the location of the user 1, easily causing a direction of a sound source (for example, the user 1) observed by the user 4 through a video frame to be inconsistent with a direction of a sound source heard by the user 4 through a sound. This is not conducive to improvement of experience of the user 4.

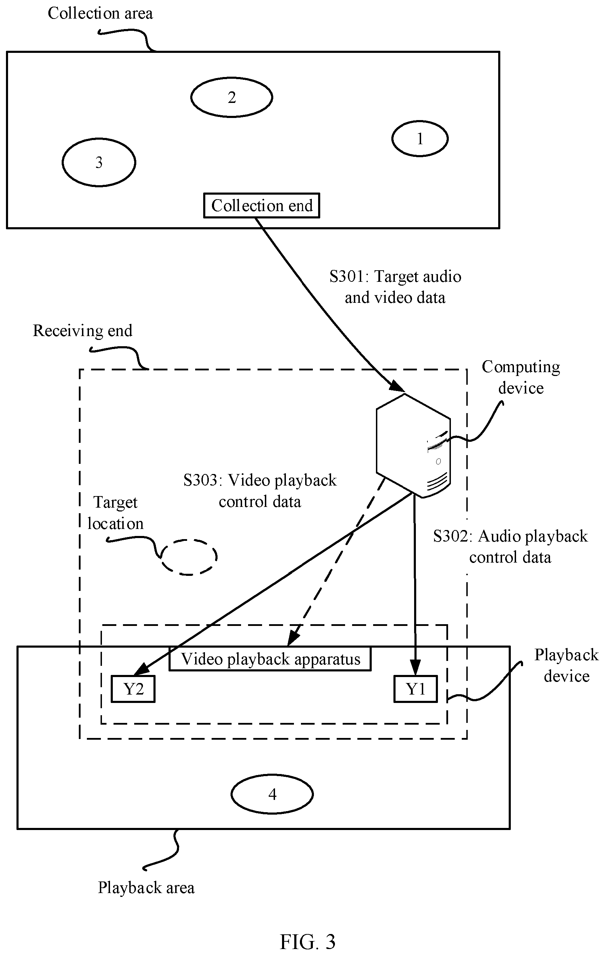

To resolve the foregoing problem, this application provides a playback control method. Even if the collection end does not send location information of a sound source to the receiving end, locations of an auditory sound source and a visual sound source are still consistent at the receiving end, thereby creating face-to-face video conference communication experience. FIG. 3 schematically shows a possible procedure of a playback control method. As shown in FIG. 3, the method includes steps S301 and S302. Optionally, the method may be applied to the computing device shown in FIG. 1.

S301: Obtain target audio and video data.

The computing device may obtain the target audio and video data. The target audio and video data includes but is not limited to data of a target sound and a target video frame. In this application, an object that generates the target sound is referred to as a target object. In other words, the target object is a sound source that generates the target sound. The target video frame may include an image area (referred to as a target image area) of the target object. Optionally, the target object is a person. For example, the target object is the user 1 shown in FIG. 1. The target sound is the sound 1 described above, and the target video frame is shown in FIG. 2. Optionally, the target image area is the image area Q1 shown in FIG. 2.

A source of the target audio and video data is not limited in this application. Optionally, the computing device receives the target audio and video data from the collection end shown in FIG. 1. The target audio and video data is not limited to original data sent by the collection end in this application. Optionally, the computing device obtains the target audio and video data from audio and video data sent by the collection end. A manner in which the computing device obtains the target audio and video data from the audio and video data is not limited in this application. The following describes several possible selection manners by using examples. Details are not described herein.

Optionally, the data of the target sound and the target video frame are obtained by a collection device by performing collection in a same area (referred to as a collection area) in a same time period (referred to as a target time period). The collection area may be a real scenario or a simulated scenario. The collection device includes a video collection apparatus and an audio collection apparatus. The audio collection apparatus is configured to collect data of a sound in the collection area in the target time period, and the video collection apparatus is configured to collect a video frame (or referred to as a video frame sequence) in the collection area in the target time period. The collection device may be a real device in a real scenario. For example, optionally, the collection device is the collection device shown in FIG. 1, and the collection area is the first conference room shown in FIG. 1. Alternatively, the collection device may be a virtual device in a virtual scenario.

A format and an encapsulation manner of the target audio and video data obtained by the computing device are not limited in this application, provided that the computing device can obtain the data of the target sound and the target video frame from the target audio and video data. For example, in the target audio and video data, the data of the target sound and the target video frame are encapsulated in different packets, and the computing device decapsulates the plurality of packets to obtain the data of the target sound and the target video frame. Alternatively, in the target audio and video data, the data of the target sound and the target video frame are encapsulated in a same packet, and the computing device decapsulates the packet to obtain both the data of the target sound and the target video frame.

Optionally, the target audio and video data is output on a playback device, and the playback device includes an audio playback apparatus and a video playback apparatus that are disposed in a same spatial area (referred to as a playback area). The target sound is played on the audio playback apparatus, and the target video frame is played on the video playback apparatus. Optionally, the playback device is, for example, the playback device shown in FIG. 1, and the playback area is the second conference room shown in FIG. 1.

S302: Generate audio playback control data and send the audio playback control data to the audio playback apparatus based on the target audio and video data.

After obtaining the target audio and video data, the computing device may generate the audio playback control data and send the audio playback control data to the audio playback apparatus based on the target audio and video data. The audio playback control data indicates the audio playback apparatus to simulate a sound source at a target location to play the target sound. When the audio playback apparatus has a function of adjusting a location of an equivalent sound source, the audio playback apparatus may simulate a sound source at a location to play a sound. In this way, when a user in the playback area listens to the target sound played by the sound source at the target location simulated by the audio playback apparatus, it is considered that the target sound comes from the target location, in other words, an auditory sound source of the target sound or an equivalent sound source of the audio playback apparatus is at the target location.

Optionally, the target location is a location that is determined based on information about the target image area in the target video frame and at which the target sound is made, in other words, the target location is related to the information about the target image area, so that the target location is close to a location of a speaker that is determined from the target video frame when the user watches the target video frame that is output by the video playback apparatus. In this way, a direction of the target sound is consistent with a direction of the speaker in the target video frame in the playback area, thereby creating face-to-face video conference communication experience.

Optionally, the audio playback apparatus includes n audio playback units, where n is a positive integer greater than or equal to 2. Optionally, the location of the equivalent sound source of the audio playback apparatus may be adjusted by adjusting statuses of all or some of the n audio playback units. The status of the audio playback unit includes an on/off state of the audio playback unit, and/or a volume of an output sound, and/or a delay of the output sound, and/or the like.

Optionally, the audio playback control data includes the data of the target sound and audio control data, and the audio control data indicates the audio playback apparatus to play the target sound by using a sound source at an equivalent target location.

Optionally, the audio control data indicates location information (referred to as target location information) of the target location, and the audio playback apparatus may configure a location of a target equivalent sound source as the target location based on the target location information.

Optionally, the audio control data includes sub-audio control data used for input of each of the n audio playback units, and each sub-audio control data indicates a status of a corresponding audio playback unit. Each audio playback unit outputs the target sound based on the received sub-audio control data, so that the n audio playback units simulate the sound source at the target location to output the target sound.

Optionally, step S302 includes steps S3021 and S3022.

S3021: Determine the target image area in which the target object is located in the target video frame.

After obtaining the target audio and video data, the computing device may determine the image area (referred to as the target image area) in which the target object is located in the target video frame. In other words, an object presented in the target image area is the object that makes the target sound. Optionally, the target sound is a sound made by a person. Correspondingly, the target object is a person, or more specifically, the target object is a face or lips of the person. In this application, an example in which the target image area is an image area in which the face is located is used below.

Optionally, the computing device may recognize one or more image areas (referred to as candidate image areas) including the face in the target video frame, where each candidate image area is an image area including the face in the target video frame. The computing device may determine the target image area from the one or more candidate image areas based on the target image information.

Optionally, the image information indicates a lip motion status of at least one candidate image area. The computing device may recognize the lip motion status of the face in the candidate image area by using a lip motion detection technology, where the lip motion status indicates that a lip motion occurs or no lip motion occurs. A specific implementation of the lip motion detection technology is not limited in this application. For example, the computing device may recognize a lip area from the candidate image area, and determine the lip motion status based on a shape of the lip area (for example, a distance between an upper lip and a lower lip). Optionally, the lip motion status of the target image area indicates that a lip motion occurs.

Optionally, the image information indicates a facial feature of a target sound source, and an object matching an image feature recognized from the target image area is the same as an object matching a voiceprint feature of the target sound source. Optionally, the computing device may obtain an identity information record, where the identity information record includes identity information of one or more users, and the identity information of each user associates a voiceprint of a sound made by the user with a facial feature of the user. The computing device may determine the facial feature of the target sound source based on a voiceprint of the target sound and the target identity information in the identity information record, where the voiceprint recorded in the target identity information is consistent with the voiceprint of the target sound, and the facial feature of the target sound source is the facial feature recorded in the target identity information.

The facial feature is used to describe a feature of a key part of a face. Facial features of different persons are generally different, and facial features of a same person are generally unchanged. This application does not limit the key part selected from the face, and does not limit a form of the facial feature. For example, the facial feature may be a group of feature vectors. This application does not limit a specific implementation of extracting the facial feature from the candidate image area, and does not limit a standard or a manner of determining whether two facial features are consistent.

A voiceprint (voiceprint) is a sound wave spectrum that carries speech information. The voiceprint is specific and relatively stable. Voiceprints of sounds made by a same person in different time periods are generally unchanged, and voiceprints of sounds made by different persons are generally different. Therefore, the voiceprint may recognize an identity of a sound source. This application does not limit a manner of extracting the voiceprint of the target sound based on the data of the target sound, and does not limit a standard or a manner of determining whether two voiceprints are consistent.

Optionally, the target information indicates a lip motion status of each candidate image area and feature information of the target sound source. The computing device may determine the target image area from the one or more candidate image areas with reference to the lip motion status of each candidate image area and the feature information of the target sound source. For example, the lip motion status of the target image area indicates that a lip motion occurs, and the facial feature recognized from the target image area is consistent with the facial feature of the target sound source. A possible specific procedure is described below by using an example with reference to the accompanying drawings. Details are not described herein.

When the target video frame includes only one candidate image area, optionally, the computing device may use the candidate image area as the target image area.

When the target video frame includes a plurality of frames of images, the computing device may obtain a target image area of each frame of image in the foregoing manner, and then determine a target location based on a location of the target image area of each frame of image.

Alternatively, when the target video frame includes a plurality of frames of images, the computing device may select one frame of image (referred to as a target image) from the plurality of frames of images, and obtain a target image area of the target image in the foregoing manner. Optionally, the computing device may perform lip motion detection on the candidate image area in the target image based on the plurality of frames of images, to more accurately determine the lip motion status of each candidate image area, so as to determine the target image area.

S3022: Send the audio playback control data to the audio playback apparatus based on the information about the target image area.

After determining the target image area, the computing device may send the audio playback control data to the audio playback apparatus based on the information about the target image area. Because the target object in the target image area is the object that is determined by the user by using the target video frame and that makes the target sound, the audio playback control data is sent to the audio playback apparatus based on the information about the target image area, so that a sound direction is consistent with a direction of a speaker in an image at the receiving end, thereby creating face-to-face video conference communication experience.

In this application, an area that is in the playback area and that is used to display the target video frame that is output by the video playback apparatus is referred to as a display area of the target video frame. Optionally, the video playback apparatus includes a display, and the display area is on the display of the video playback apparatus. Alternatively, optionally, the video playback apparatus is configured to display the target video frame on another medium other than the video playback apparatus. For example, the video playback apparatus is a projection apparatus, and the display area is a projection area of the projection apparatus on a wall.

Optionally, the information about the target image area indicates a location of the target image area in the target video frame and/or a pixel size of the target object in the target image area. The information about the target image area helps set the target location as a visual location at which the target video frame is played.

The location of the target image area in the target video frame helps determine a location of the target object in the display area or a location of the target object relative to a camera in the collection area. The pixel size of the target object in the target image area helps determine a distance of the target object relative to the display area or the camera in the collection area.

The target audio and video data further includes calibration information. Optionally, the computing device may generate the audio playback control data based on the calibration information and the information about the target image area, to more accurately determine a visual location of the target sound that is determined by using the target video frame. Optionally, the calibration information indicates a location of the target video frame on a playback interface of the video playback apparatus and/or a location of the video playback apparatus (or the display area) relative to the audio playback apparatus, and the video playback apparatus is configured to play the target video frame.

In some examples, the target video frame is a video frame of one image in video frames of a plurality of images, the playback interface of the video playback apparatus is configured to play the video frames of the plurality of images, and a location of the target video frame in the video frames of the plurality of images is determined, to help determine the location of the target video frame on the playback interface of the video playback apparatus, so as to more accurately determine a visual location of the target sound that is determined by using the target video frame.

Optionally, after step S302, the method further includes step S303.

S303: Send video playback control data to the video playback apparatus based on the target video frame.

After obtaining the target audio and video data, the computing device may send the video playback control data to the video playback apparatus based on the target video frame in the target audio and video data. The video playback control data indicates the video playback apparatus to output the target video frame.

Optionally, the video playback control data and the audio playback control data each carry synchronization information, and the synchronization information is used to control the audio playback apparatus to synchronously output the target sound in a process in which the video playback apparatus outputs the target video frame.

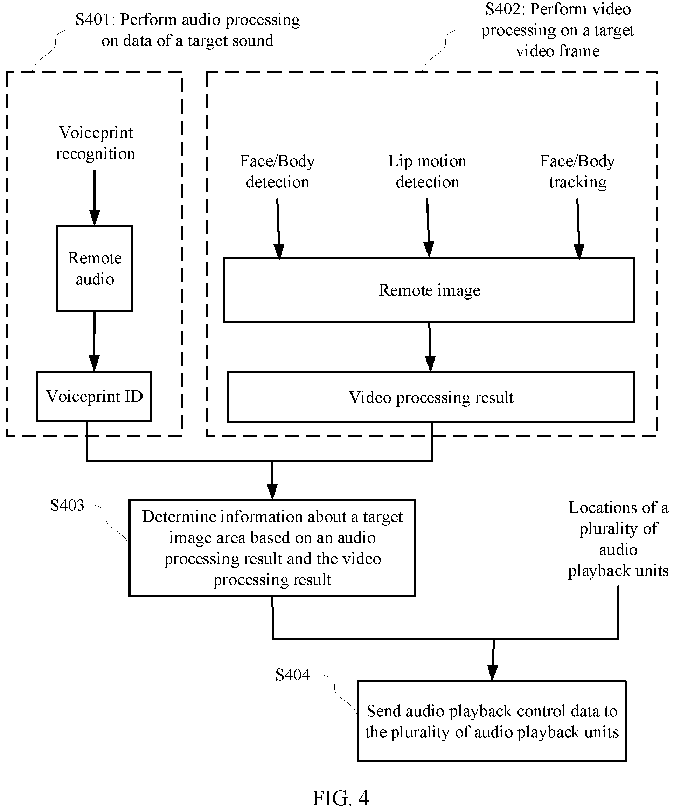

FIG. 4 schematically shows a possible specific procedure of step S302. As shown in FIG. 4, the procedure includes S401 to S404.

S401: Perform audio processing on the data of the target sound.

After obtaining the data of the target sound (or referred to as a remote audio), the computing device may invoke a voiceprint recognition model to perform processing, obtain a voiceprint (or referred to as a voiceprint feature), and compare the voiceprint with a feature set in a registration database to obtain a voiceprint recognition result, namely, a voiceprint identity document (identity document, ID). Optionally, the voiceprint recognition model is a machine learning model obtained through training.

S402: Perform video processing on the target video frame.

After the computing device obtains the target video frame (or referred to as a remote image), it is assumed that the target video frame includes a plurality of frames of images. The computing device may select a single frame of image (referred to as a target image) from the plurality of frames of images, and separately process the target image and the plurality of frames of images.

The computing device may perform face detection on each frame of image. The computing device may process a single frame of image by invoking a face detection model, to obtain an image area (that is, a candidate image area) of one or more faces in the frame of image. The frame of image is shown in FIG. 2. The computing device may obtain an image area 1, an image area 2, and an image area 3. The face detection model may be a machine learning model. For example, the face detection model may be a you only look once (you only look once, yolo) model.

Then, the computing device may perform key point detection on an image area of each face, extract a lip area frame (or referred to as a lip area), and perform lip motion detection on the lip area of each image area. To improve accuracy, the computing device may input a plurality of lip areas of a same person into a lip motion detection model, to determine a lip motion status of the person. For example, the computing device obtains the lip motion status of the object through multi-frame lip feature change analysis, to determine whether the object is speaking or not speaking. Therefore, the computing device may obtain a speaking status of each object in the target video frame.

The computing device may process the target video frame by using a tracking technology, to determine a facial feature (denoted as ReID below) of each candidate image area.

S403: Determine location information of the target image area based on an audio processing result and a video processing result.

The computing device may determine the target image area of the target sound source in the target video frame based on the audio processing result and the video processing result. For example, the audio processing result is the voiceprint recognition result obtained in step S401, and the video processing result includes the face detection result, the face tracking result, and the lip motion detection result obtained in step S402.

The computing device may maintain a table of mapping between a voiceprint ID and an ReID of a current speaker and a voiceprint ID and an ReID of a historical speaker. The mapping table indicates the voiceprint ID and the ReID of the current speaker, and indicates the voiceprint ID and the ReID of the historical speaker.

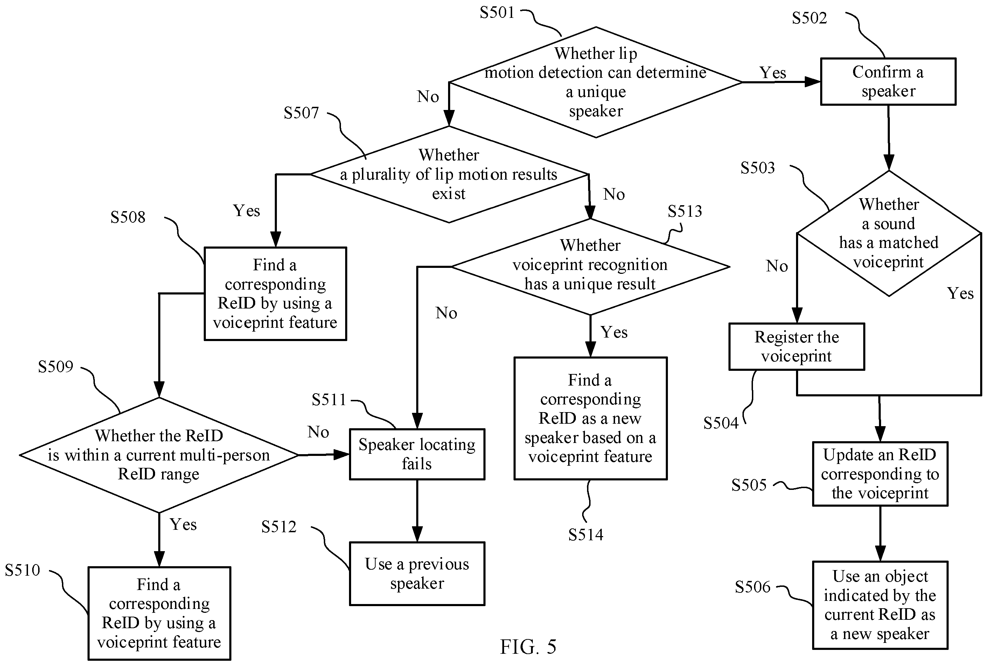

Optionally, the computing device may determine the target image area from the one or more candidate image areas with reference to the lip motion status of each candidate image area and the feature information of the target sound source. FIG. 5 schematically shows a possible procedure in which the computing device determines the target image area. As shown in FIG. 5, the procedure includes steps S501 to S514.

S501: Determine, based on the lip motion detection result, whether there is a unique speaker currently; and if yes, perform step S502; or if no, perform step S507.

After performing lip motion detection on each candidate image area in the target video frame, the computing device determines, based on the lip motion detection result, whether there is a unique speaker currently, in other words, whether the target video frame has only one candidate image area for which a lip motion detection result indicates that a lip motion occurs; and if yes, performs step S502; or if no, performs step S507.

S502: Confirm a speaker.

When the target video frame has only one candidate image area for which a lip motion detection result indicates that a lip motion occurs, it is determined that the candidate image area is the target image area, and an object in the image area is the target object (or referred to as a speaker of the target sound).

S503: Determine whether the voiceprint has a matched voiceprint; and if yes, perform step S505; or if no, perform step S504.

The computing device performs voiceprint recognition on the data of the target sound to obtain the voiceprint of the target sound, and determines whether the voiceprint has a matched voiceprint, for example, determines whether the voiceprint has a matched voiceprint in the registration database; and if yes, performs step S505; or if no, performs step S504.

S504: Register the voiceprint.

If the voiceprint has no matched voiceprint, the computing device may register the voiceprint, for example, add a record of the voiceprint to the registration database, and allocate and store a voiceprint ID of the voiceprint.

S505: Update an ReID corresponding to the voiceprint.

If it is determined in step S503 that the voiceprint has a matched voiceprint in the registration database, or the voiceprint is registered by performing S504, the computing device may establish a correspondence between the voiceprint ID and an ReID of the target image area, that is, update the ReID corresponding to the voiceprint.

S506: Use an object indicated by the current ReID as a new speaker.

An object indicated by the ReID (or referred to as the current ReID) of the target image area is the target object, and the target object is used as the new speaker (that is, the person who makes the target sound).

S507: Determine whether a plurality of lip motion results exist; and if yes, perform step S508; or if no, perform step S513.

When a lip motion detection result of any candidate image area in the target video frame indicates that no lip motion occurs, or when lip motion detection results of a plurality of candidate image areas in the target video frame each indicate that a lip motion occurs, the computing device may determine whether a plurality of lip motion results exist; and if yes, perform step S508; or if no, perform step S513.

S508: Find a corresponding ReID by using a voiceprint feature.

When it is determined that the lip motion detection results of the plurality of candidate image areas in the target video frame each indicate that a lip motion occurs, the computing device may find a corresponding ReID by using a voiceprint feature of the target sound.

S509: Determine whether the ReID is within a current multi-person ReID range; and if yes, perform step S510; or if no, perform step S511.

After step S508, the computing device may determine whether the found ReID is within an ReID (or referred to as a current ReID) range of the plurality of candidate image areas in the target video frame; and if yes, perform step S510; or if no, perform step S511.

S510: Find a corresponding ReID by using a voiceprint feature.

If it is determined in step S509 that the ReID is within the current multi-person ReID range, a candidate image area (that is, the target image area) corresponding to the ReID is determined from the plurality of candidate image areas of the target video frame, where an object in the candidate image area is the target object, and an object indicated by the ReID is a new speaker.

S511: Determine that speaker locating fails.

If it is determined in step S509 that the ReID is not within the current multi-person ReID range, it is considered that the target object that makes the target sound is not in the target video frame, and it may be determined that the target object (that is, the speaker) fails to be located.

S512: Use a previous speaker.

Optionally, after step S511, the computing device may consider that a previously determined speaker is a current speaker, and use a candidate image area corresponding to the previous speaker as the target image area.

S513: Determine whether voiceprint recognition has a unique result; and if yes, perform step S514; and if no, perform step S511.

When a lip motion detection result of any candidate image area in the target video frame indicates that no lip motion occurs, the computing device determines whether voiceprint recognition has a unique result, where that voiceprint recognition has a unique result may mean that an ReID of a candidate image area in the target video frame matches (or is consistent with) an ReID corresponding to a voiceprint ID of the target sound; and if yes, performs step S514; or if no, performs step S511.

S514: Find a corresponding ReID as a new speaker based on the voiceprint feature.

When it is determined that voiceprint recognition has a unique result, the computing device uses, as the new speaker (that is, the target object), an object indicated by the ReID corresponding to the voiceprint feature (for example, the voiceprint ID of the target sound) in the target video frame, where a corresponding candidate image area is the target image area.

Optionally, steps S401 to S403 are a possible specific implementation of step S3021.

S404: Send the audio playback control data to a plurality of audio playback units.

After determining the target image area in the target video frame, the computing device may determine the information about the target image area (for example, a location of the target object in an image of the target video frame). The computing device obtains direction information of the target sound, for example, a direction of arrival (direction of arrival, DOA), through computation based on the information about the target image area and calibration information of the video collection apparatus (for example, a camera) that collects the target video frame. Then, the computing device computes a distance between the target object and the video collection apparatus based on a face size of the target object in the target image area. The computing device obtains the audio control data, which is referred to as control information, of the plurality of audio playback units through computation with reference to the sound direction information DOA, the distance between the target object and the video collection apparatus, and location information of the plurality of audio playback units in a playback area, where the control information is used to control a status of a corresponding audio playback unit, for example, control strength and/or a delay of a sound that is output by the corresponding audio playback unit, and generate an adaptive stereo effect. Optionally, control of the audio playback unit is mainly for a scenario in which there are a plurality of audio playback units, and a location of the audio playback unit is mainly at an indoor front end (in front of a person). In a surrounding mode, control is considered to be canceled, or only a front-end audio playback unit is controlled, and an audio playback unit at another location does not play an audio.

The following describes a specific computation method of step S404 by using an example.

First, coordinates (x, y) of the target object in a coordinate system of the video collection apparatus are obtained through computation based on image coordinates of the target image area in the target video frame and a calibration parameter of the video collection apparatus, where x and y are coordinates parallel to a plane of the video collection apparatus. Therefore, angle information of the target object in a horizontal direction may be computed.

Then, the distance between the target object and the video collection apparatus is estimated based on the face size in the target image area. For example, several thresholds are first set, different distances correspond to different face pixel sizes, and then matching is performed according to a proximity principle, so as to determine the distance (denoted as L1) between the target object and the video collection apparatus.

Then, a location relationship between the video collection apparatus (or a display area of the video collection apparatus) and the audio playback unit is obtained based on an environmental parameter of the playback area (for example, the second conference room shown in FIG. 1), to obtain, through computation, distances and angles between the target object and different audio playback units that are seen by the user by using the target video frame.

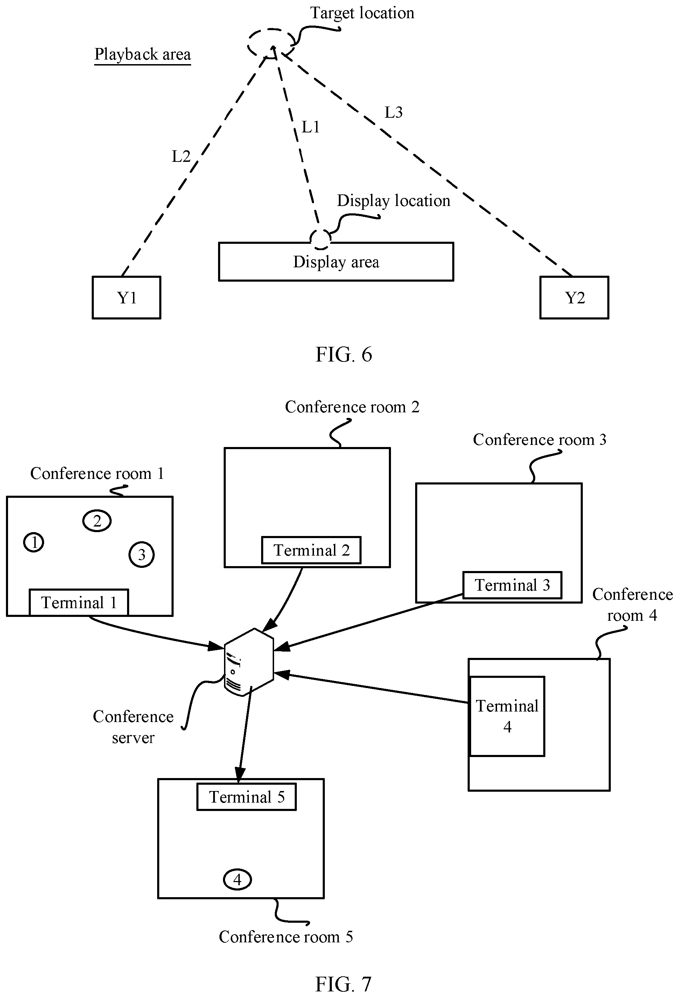

For example, the playback area includes two audio playback units (denoted as Y1 and Y2 respectively). FIG. 6 schematically shows a possible scenario of the playback area. As shown in FIG. 1, a display location is a location (for example, a central location) in a display area of the video playback apparatus, and is equivalent to a location of the video collection apparatus. After relative locations between the display area and the two audio playback units are known, the target location may be determined in the playback area shown in FIG. 6 based on a location of the target object relative to the video collection apparatus, that is, the location of the target object that is seen by the user in the playback area by using the target video frame. It is assumed that a distance between the target location and the audio playback unit 1 is L2, and a distance between the target location and the audio playback unit 2 is L3.

The computing device may control volume values of the two audio playback units based on the distances between the target object and the two audio playback units, for example, set different volume values based on intervals. Optionally, if L2 and L3 are the same, volumes of the two audio playback units are controlled to be the same, and are separately set to 50% of a specified volume. Optionally, if a difference between L2 and L3 is within 50%, volumes of the two audio playback units are respectively set to 70% and 30% of a specified volume. Optionally, if a difference between L2 and L3 is beyond 50%, volumes of the two audio playback units are respectively set to 90% and 10% of a specified volume. In addition, a linear relationship may alternatively be used to complete volume allocation based on a distance proportion. Optionally, volume V1 of the audio playback unit 1=total volume*L2/(L2+L3), and volume V2 of the audio playback unit 2=total volume*L3/(L2+L3).

In addition, optionally, control at different angles may alternatively be implemented by using a real panning (real panning) technology.

As mentioned in step S301, the target audio and video data is based on a part of audio and video data obtained by the computing device.

Optionally, the target audio and video data is audio and video data of fixed duration that is selected from the audio and video data.

Optionally, the sound source (referred to as the target sound source) of the target sound includes a person. A manner in which the computing device recognizes a type of the target sound source is not limited in this application. Optionally, the computing device analyzes the data of the target sound by using a voiceprint recognition technology, to determine whether the target sound source is a person.

Optionally, the target video frame includes an image area corresponding to the person. A manner in which the computing device recognizes the image area corresponding to the person in the target video frame is not limited in this application. Optionally, the computing device analyzes the target video frame by using a facial recognition technology, to determine whether the target video frame includes an image area corresponding to a face.

When the audio and video data includes data of a mixed sound, optionally, the data of the target sound is obtained through separation from the data of the mixed sound. The mixed sound includes sounds made by a plurality of objects, and the target sound is a sound made by a single object. For example, in the first conference room shown in FIG. 1, both the user 1 and the user 2 make sounds in the target time period, and the audio data collected by the audio collection apparatus includes mixed sounds of the user 1 and the user 2.

A specific method for performing sound separation on the data of the mixed sound is not limited in this application. Optionally, data of a sound made by a single object may be obtained through separation from the data of the mixed sound by using a machine learning model. For example, data (denoted as A1) of the sound of the user 1 and data (denoted as A2) of the sound of the user 2 are obtained through separation from the audio data.

Optionally, data of a sound made by each object may be obtained through separation from the audio and video data, and at least one of steps S301 to S303 is performed or at least one of steps S401 to S404 is performed by using the data of the sound made by each object and the target video frame in the audio and video data as the target audio and video data. For example, if the target audio and video data includes A1 and a target time-frequency frame, steps S301 and S302 are performed; and if the target audio and video data includes A2 and the target time-frequency frame, steps S301 and S302 are performed. A location of the user 1 that is seen by the user 4 in the second conference room is referred to as a location 1, and a location of the user 2 that is seen by the user 4 in the second conference room is referred to as a location 2. In this way, the computing device may control the audio playback apparatus to simulate a sound source at the location 1 to output the sound of the user 1, and simulate a sound source at the location 2 to output the sound of the user 2, thereby creating face-to-face communication user experience.

Because data of different individual sounds obtained from the data of the mixed sound corresponds to a same video frame, to reduce computation overheads of the computing device, optionally, the foregoing processing process for the data of different individual sounds may reuse some processing result. For example, in a process of performing steps S301 and S302 by using the target audio and video data including A2 and the target time-frequency frame, after a candidate image area is determined, in the process of performing steps S301 and S302 by using the target audio and video data including A2 and the target time-frequency frame, the computing device does not need to re-determine the candidate image area in the target video frame.

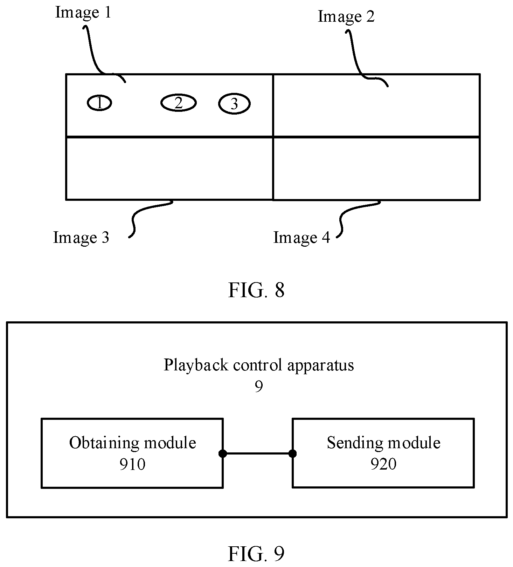

FIG. 7 schematically shows another system architecture to which this application is applicable. As shown in FIG. 7, the system architecture includes a conference room 1 to a conference room 5, and a terminal 1 to a terminal 5 are respectively disposed in the conference room 1 to the conference room 5. Each terminal in the terminal 1 to the terminal 4 may be understood with reference to the collection end shown in FIG. 1, and is configured to obtain audio and video data (denoted as audio and video data 1 to audio and video data 4) of a conference room in which the terminal is located. A conference server is configured to separately obtain the audio and video data 1 to the audio and video data 4, assemble a video frame 1 in the audio and video data 1 to a video frame 4 in the audio and video data 4 into video frames of a plurality of images shown in FIG. 8, and then send audio and video data (including the video frames of the plurality of images, and data of a sound 1 in the audio and video data 1 to data of a sound 4 in the audio and video data 4) to the terminal 5. The terminal 5 may be understood with reference to the receiving end shown in FIG. 1, and is configured to obtain the audio and video data sent by the conference server, output the video frames of the plurality of images, and output the sound 1 to the sound 4.

Optionally, after completing multi-image splicing, the conference server determines a participant who is speaking from audio streams uploaded by a plurality of sending ends, and synchronously adds multi-image video streams, a selected audio stream, and sub-image location information of a participant corresponding to a current audio stream in a plurality of images to signaling for sending to the receiving end.

Optionally, in a multi-party conference scenario shown in FIG. 7, the conference server is an optional device, or the conference server transparently transmits the received audio and video data 1 to audio and video data 4 to the terminal 5, and the terminal 5 assembles the video frame 1 to the video frame 4 into the video frames of the plurality of images shown in FIG. 8, outputs the video frames of the plurality of images, and outputs the sound 1 to the sound 4.

In the multi-party conference scenario shown in FIG. 7, the audio and video data received by the terminal 5 is used to output the video frames of the plurality of images. On the basis of the foregoing solution, the receiving end (or a computing device) needs to additionally add layout information of a multi-image video and information of a speaking site at a moment for comprehensive processing.

Optionally, when the audio and video data obtained by the computing device is used to output the video frames of the plurality of images, assuming that audio data corresponding to a video frame of a target image in the audio and video data indicates that a person is speaking, the computing device may obtain the video frame of the target image as a target video frame. A quantity of images in the video frames of the plurality of images is not limited in this application. As shown in FIG. 8, assuming that data of a sound 1 corresponding to a video frame 1 of an image 1 indicates that a person is speaking, the video frame 1 of the image 1 may be used as the target video frame, and at least one of steps S301 to S303 is performed or at least one of steps S401 to S404 is performed by using target audio and video data including the video frame 1 of the image 1 and the data of the sound 1 corresponding to the image 1.

Alternatively, optionally, when the audio and video data is used to output the video frames of the plurality of images, the computing device may perform at least one of steps S301 to S303 or perform at least one of steps S401 to S404 by using a video frame of each image and corresponding audio data as the target video frame and data of a target sound respectively.

Optionally, in a process of performing the foregoing procedure by using the video frame of each image and the corresponding audio data as the target video frame and the data of the target sound respectively, after a target image area is determined, corresponding audio playback control data may be generated with reference to a location of the target video frame in the video frames of the plurality of images. Optionally, the information about the target image area in step S3022 further indicates the location of the target video frame in the video frames of the plurality of images.

The methods provided in this application are described above. For ease of better implementation of the solutions in embodiments of this application, correspondingly, related devices configured to cooperate in implementing the solutions are further provided below.

FIG. 9 is a diagram of a structure of a playback control apparatus according to an embodiment of this application. The playback control apparatus may be the computing device in the method embodiment shown in FIG. 3, and may perform the playback control method shown in FIG. 3, or may perform the method shown in FIG. 4 or FIG. 5. As shown in FIG. 9, the playback control apparatus 9 includes an obtaining module 910 and a sending module 920.

In a possible implementation, the obtaining module 910 is configured to perform step S301, and optionally perform the optional method in the foregoing steps; and the sending module 920 is configured to perform step S302 and/or step S303, and optionally perform the optional method in the foregoing steps.

In a possible implementation, the sending module 920 is configured to perform steps S401 to S404, or perform steps S501 to S514.

The two modules may communicate data to each other through a communication channel. It should be understood that the modules included in the playback control apparatus 9 may be software modules, or may be hardware modules, or some of the modules are software modules and some of the modules are hardware modules.

For possible implementations and beneficial effects of the obtaining module 910 and the sending module 920 in the playback control apparatus 9, refer to related content of a corresponding method. Details are not described herein again.

It should be noted that the structure of the playback control apparatus is merely used as an example, and should not constitute a specific limitation. The modules in the playback control apparatus may be added, removed, or combined as required. In addition, operations and/or functions of the modules in the playback control apparatus are intended to implement corresponding procedures of the method. For brevity, details are not described herein again.

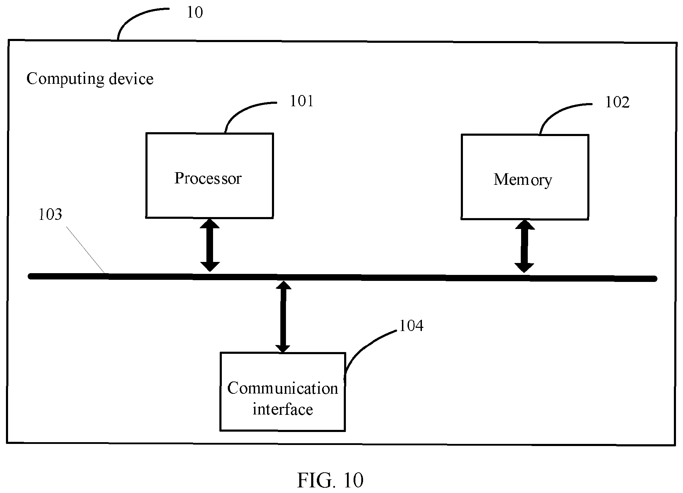

FIG. 10 is a diagram of a structure of a computing device according to an embodiment of this application. As shown in FIG. 10, the computing device 10 includes a processor 101, a communication interface 104, and a memory 102. The processor 101, the communication interface 104, and the memory 102 are connected to each other through an internal bus 103.

The processor 101 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The bus 103 may be a peripheral component interconnect (peripheral component interconnect, PCI) bus, an extended industry standard architecture (extended industry standard architecture, EISA) bus, or the like. The bus 103 may be classified into an address bus, a data bus, a control bus, or the like. For ease of representation, only one bold line represents the bus in FIG. 10, but this does not mean that there is only one bus or only one type of bus.

The memory 102 may include a volatile memory (volatile memory), for example, a random access memory (random access memory, RAM). The memory 102 may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 102 may alternatively include a combination of the foregoing types.

It should be noted that the memory 102 of the computing device 10 stores code corresponding to each module of the playback control apparatus 9, and the processor 101 executes the code to implement a function of each module of the playback control apparatus 9, that is, executes the method in S301 and S302, or executes the method in S303, or executes the method in steps S401 to S404, or executes the method in steps S501 to S514.

This application further provides a computer-readable storage medium. The computer-readable storage medium stores a computer program. When the computer program is executed by a processor, some or all of the steps recorded in any one of the foregoing method embodiments may be implemented. The computer-readable storage medium may be any usable medium accessible to a general-purpose or special-purpose computer. An embodiment of the present invention further provides a computer program. The computer program includes instructions. When the computer program is executed by a computer, the computer is enabled to perform some or all of the steps in any one of the foregoing method embodiments. A person of ordinary skill in the art may understand that the computer-readable storage medium includes any non-transitory (non-transitory) machine-readable medium that can store program code, for example, a USB flash drive, a removable hard disk, a magnetic disk, an optical disc, a RAM, an SSD, or a non-volatile memory (non-volatile memory).

This application further provides a computer program. The computer program includes instructions. When the computer program is executed by a computer, the computer is enabled to perform some or all of the steps in any one of the foregoing area resource provisioning methods.

This application further provides a playback system. The playback system may include the playback control apparatus shown in FIG. 8 or the computing device shown in FIG. 9, and may further include an audio playback apparatus and/or a video playback apparatus. Optionally, the playback system may include all or some of the devices shown in FIG. 1 or FIG. 3.

The playback control method provided in this application may be specifically performed by a chip in the computing device. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip in the computing device performs the foregoing method examples. Optionally, the storage unit is a storage unit in the chip, for example, a register or a cache. Alternatively, the storage unit may be a storage unit that is outside the chip and that is in a wireless access device end, for example, a read-only memory (read-only memory, ROM) or another type of static storage device that can store static information and instructions, or a random access memory (random access memory, RAM).

In the foregoing embodiments, the description of each embodiment has respective focuses. For a part that is not described in detail in an embodiment, refer to related descriptions in other embodiments.

It should be noted that, for brief description, the foregoing method embodiments are represented as a series of action combinations. However, a person skilled in the art should understand that this application is not limited to the described action sequence, because some steps may be performed in other sequences or simultaneously according to this application. It should be further appreciated by a person skilled in the art that embodiments described in this specification all belong to example embodiments, and the involved actions and modules are not necessarily required by this application.

In this specification, the claims, and the accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

It may be clearly understood by a person skilled in the art that, for the purpose of convenient and brief description, for a detailed working process of the foregoing system, apparatus, and unit, refer to a corresponding process in the foregoing method embodiment. Details are not described herein again. In the foregoing embodiments, the description of each embodiment has respective focuses. For a part that is not described in detail in an embodiment, refer to related descriptions in other embodiments. It should be noted that, for brief description, the foregoing method embodiments are represented as a series of action combinations. However, a person skilled in the art should understand that this application is not limited to the described action sequence, because some steps may be performed in other sequences or simultaneously according to this application. It should be further appreciated by a person skilled in the art that embodiments described in this specification all belong to example embodiments, and the involved actions and modules are not necessarily required by this application. "A and/or B" in embodiments of this application may be understood as including two solutions: "A and B" and "A or B".

## Claims

1. A playback control method, comprising:
obtaining target audio and video data, wherein the target audio and video data comprises a target video frame and data of a target sound, the target video frame comprises a target image area of a target object, and the target object is a sound source that generates the target sound; and
generating audio playback control data and sending the audio playback control data to an audio playback apparatus based on the target audio and video data, wherein the audio playback control data is used to control the audio playback apparatus to simulate a sound source at a target location to play the target sound, and the target location is related to information about the target image area.

2. The method according to claim 1, wherein the information about the target image area indicates a location of the target image area in the target video frame and/or a pixel size of the target object in the target image area.

3. The method according to claim 1 or 2, wherein the target image area is determined from a plurality of candidate image areas, and each candidate image area is an image area comprising a face in the target video frame.

4. The method according to claim 3, wherein a lip motion status of the face in the target image area indicates that a lip motion occurs, and/or an object matching an image feature of the target image area is the same as an object matching a voiceprint feature of the target sound.

5. The method according to any one of claims 1 to 4, wherein the target audio and video data further comprises calibration information, the calibration information indicates a location of the target video frame on a playback interface of a video playback apparatus and/or a location of the video playback apparatus relative to the audio playback apparatus, and the video playback apparatus is configured to play the target video frame.

6. The method according to any one of claims 1 to 5, wherein the data of the target sound is obtained through separation from data of a mixed sound, and the mixed sound comprises sounds generated by a plurality of objects.

7. The method according to any one of claims 1 to 6, wherein the target video frame is a video frame of a single image that is obtained from video frames of a plurality of images.

8. The method according to any one of claims 1 to 7, wherein the method further comprises:
sending video playback control data to the video playback apparatus based on the target audio and video data, wherein the video playback control data is used to control the video playback apparatus to play the target video frame in a target time period, and the target time period is a time period in which the audio playback apparatus plays the target sound.

9. A playback control apparatus, comprising:
an obtaining module, configured to obtain target audio and video data, wherein the target audio and video data comprises a target video frame and data of a target sound, the target video frame comprises a target image area of a target object, and the target object is a sound source that generates the target sound; and
a sending module, configured to send audio playback control data to an audio playback apparatus based on the target audio and video data, wherein the audio playback control data is used to control the audio playback apparatus to simulate a sound source at a target location to play the target sound, and the target location is related to information about the target image area.

10. A computing device, comprising a memory and a processor, wherein the memory stores code, the processor is configured to execute the code, and when the code is executed, the computing device performs the method according to any one of claims 1 to 8.

11. A computer storage medium, wherein the computer storage medium stores a computer program, and when the program is executed by a computer, the computer is enabled to implement the method according to any one of claims 1 to 8.

12. A playback system, comprising the computing device according to claim 10 and an audio playback apparatus.

13. The playback system according to claim 12, wherein the playback system further comprises a video playback apparatus.
